# EUROPÄISCHE PATENTSCHRIFT

(11) **EP 2 367 251 B1**
(45) Veröffentlichungstag und Bekanntmachung des Hinweises auf die Patenterteilung: **30.10.2013**
(21) Anmeldenummer: 11405229.3
(22) Anmeldetag: 08.03.2011
(51) Int. Cl.: H02G 3/12

(54) **Träger für Elektroinstallationen**
Holder for electrical installations
Support pour installations électriques

(30) Priorität: 15.03.2010 CH 3552010; 16.06.2010 CH 9662010; 01.07.2010 CH 10712010; 16.07.2010 CH 11672010
(43) Veröffentlichungstag der Anmeldung: 21.09.2011
(73) Patentinhaber: Morach, Christoph, 8335 Hittnau (CH)
(72) Erfinder: Morach, Christoph, 8335 Hittnau (CH)
(74) Vertreter: Frei Patent Attorneys

(56) Entgegenhaltungen:
- EP-A2- 0 710 751
- FR-A- 1 459 216
- FR-A1- 2 909 231

## Beschreibung

Die Erfindung bezieht sich auf das Gebiet der Installationstechnik, und insbesondere auf einen Träger für Elektroinstallationen gemäss dem Oberbegriff des Patentanspruches 1.

### STAND DER TECHNIK

EP 0 710 751 A2 beschreibt Teleskop-Geräteträger zur Befestigung von Leuchten, Steckdosen, Bewegungsmeldern und anderen elektrischen Geräten an gedämmten Fassaden. Ein solcher Geräteträger weist einerseits eine Sockelplatte mit einem Stützrohr auf, und andererseits eine Befestigungsplatte oder eine Gerätedose, welche auf das Stützrohr aufgesetzt werden können. Beim Einsatz des Halters an einer Wand mit Dämmelementen wird wie folgt vorgegangen: Die Sockelplatte wird an einer Wand angebracht, das Stützrohr wird der Dicke einer Dämmung entsprechend abgelängt, die Befestigungsplatte oder Gerätedose wird auf das Stützrohr aufgeschoben und fixiert, beispielsweise mittels einer Bride oder einer Fixierschraube. Die Sockelplatte ist am Stützrohr teleskopierend angeordnet und kann dadurch auch, ohne dass das Stützrohr abgelängt wird, durch Verschieben entlang des Stützrohres in den gewünschten Abstand zur Wand gebracht werden. Ein flexibles Installationsrohr wird durch eine ausgebrochene Öffnung der Gerätedose oder durch das Stützrohr in die Gerätedose oder durch die Befestigungsplatte geführt. Im praktischen Einsatz können Fehler aufgrund der teleskopierenden Anordnung der Sockelplatte auftreten. So kann, wenn anstelle der Sockelplatte eine Anschlussdose eingesetzt wird, das Stützrohr in die Anschlussdose hineinragen und behindert den Einbau von Installationslementen in die Anschlussdose.

FR 1 459 216 betrifft einen Anschlusskasten, der in eine Schalung eingebaut und mit Beton umgossen wird. Zur Anpassung an verschiedene Wanddicken liegen Teleskopelemente vor.
Installationsdosen, welche dazu vorgesehen sind, in Fertigbauelemente aus Beton eingegossen zu werden, sind beispielsweise aus DE 25 18 873 A1, FR 22 51 973 und FR 93 123 bekannt. Zum Anschluss von Installationsrohren können z.T. Durchbrüche in den Installationsdosen ausgeschlagen werden. Die Montage der Installationsrohre bleibt jedoch aufwändig.

Es zeigt sich also, dass die Installation der Kabel bei bestehenden Haltern oder Anschlusskästen schwierig ist.

### DARSTELLUNG DER ERFINDUNG

Es ist deshalb Aufgabe der Erfindung, einen Träger für Elektroinstallationen der eingangs genannten Art zu schaffen, welcher eine zeitsparende Montage von Installationsrohren und später von Elektrokabeln erlaubt. Eine weitere Aufgabe ist, einen Träger zu schaffen, welcher einen zweckmässigen Anschluss von mindestens zwei Installationsrohren erlaubt. Eine weitere Aufgabe ist, eine zeitsparende Montage von Installationsrohren und später von Elektrokabeln zu ermöglichen.

Diese Aufgabe löst ein Träger für Elektroinstallationen mit den Merkmalen des Patentanspruches 1.

Der Träger weist einen an einer Wand oder einer Schaltafel befestigbaren Sockel mit einem Führungsrohr, sowie einen Aufsatz, der mittels einer Aufstecköffnung des Aufsatzes am Führungsrohr montierbar ist, wobei der Sockel einen Rohranschluss zum seitlichen Einführen von Elektrokabeln in das Führungsrohr aufweist. Dabei ist ein Übergang zwischen dem Rohranschluss und dem Führungsrohr durch einen Rohrbogen gebildet, wobei der Rohrbogen an der Aussenseite seiner Innenwand einen mittleren Krümmungsradius von mindestens drei oder vorzugsweise mindestens vier Zentimetern aufweist. In einer weiteren Ausfiihrungsform der Erfindung beträgt dieser Radius mindestens fünf Zentimeter.

Dadurch ist ein Installationsrohr durch den Rohranschluss seitlich an den Sockel anschliessbar, wobei ein Hohlraum des Sockels den Rohrbogen und dadurch eine Rohrverbindung zwischen Rohranschluss und dem Führungsrohr bildet, so dass Elektrokabel durch das Installationsrohr und den Rohranschluss in das Führungsrohr führbar sind, wobei die Kabel im Rohrbogen des Sockels umgelenkt werden. Damit wird es insbesondere möglich, Elektrokabel durch ein bereits in den Träger eingestecktes Installationsrohr hindurchzustossen. Der Installationsaufwand zum Verlegen von Installationsrohren und Elektrokabeln wird insgesamt verringert.

Es bilden also die Aufstecköffnung und das mindestens eine Führungsrohr eine durchgängige Rohrverbindung zwischen Sockel und Aufsatz zur Durchführung von Kabeln.

Falls weitere Installationsrohre angeschlossen werden sollen, so geschieht dies üblicherweise im Bereich einer Gerätedose oder einer Befestigungsplatte, was wiederum zu einem unvorteilhaften Verlauf der Installationsrohre führt.

In einer bevorzugten Ausführungsform der Erfindung weist daher der Träger zwei Rohranschlüsse auf, welche aus verschiedenen, vorzugsweise entgegengesetzten Richtungen, jeweils über einen eigenen Rohrbogen, in das Führungsrohr führen. Damit wird es möglich, Kabel aus verschiedenen Richtungen zum Halter zu führen, respektive vom Träger aus eine Leitung weiterzuführen. Wem beispielsweise der Träger eine Steckdose oder eine Leuchte trägt, so kann einer der Rohranschlüsse zur Stromversorgung und der andere zu einem Schalter führen.

In einer bevorzugten Ausführungsform der Erfindung weist der Träger ein Umlenkelement auf, welches lösbar in den Sockel eingesetzt ist und eine äussere Bogenwand mindestens eines Rohrbogens bildet. Indem das Umlenkelement herausnehmbar ist, kann einerseits der Träger - ohne das Umlenkelement - in (Spritz)Gusstechnik besonders einfach, insbesondere einstückig hergestellt werden. Bei noch nicht eingesetztem Umlenkelement liegt ein entsprechender Hohlraum im Sockel vor, durch welchen in einer Gussform ein Schieber geführt wird, welcher einen Teil der Innenseite eines oder mehrerer Rohrbogen definiert. Ohne einen solchen Schieber könnte der Sockel nicht einstückig gebildet werden, da der Krümmungsradius der Rohrbogen wesentlich grösser ist als die lichte Weite der Rohrbogen. Insbesondere ist ein Aussenradius der Rohrbogen (an der Innenfläche der Rohrbogen gemessen) mindestens das Anderthalbfache der lichten Weite des Führungsrohres und der Rohranschlüsse. Vorzugsweise verläuft der Innenradius der Rohrbogen im wesentlichen konzentrisch zum Aussenradius. Bei nicht eingesetztem Umlenkelement sind auch Elektrokabel in einer geradlinigen Verlängerung des Führungsrohres durch den Sockel hindurch führbar.

In einer alternativen Ausführungsform der Erfindung ist daher der Sockel nicht zur Aufnahme eines Umlenkelementes vorgesehen, sonder aus zwei (vorzugsweise im wesentlichen symmetrischen) Hälften zusammengesetzt, wobei die Schnittlinie zwischen diesen Hälften entlang der Rohrbögen verläuft.

In einer bevorzugten Ausführungsform der Erfindung weist der Träger ein Verlängerungsrohr auf, welches mit einem inneren Ende auf das Führungsrohr des Sockels und mit einem äusseren Ende auf die Aufstecköffnung des Aufsatzes aufsteckbar ist, wobei auch dann noch das Führungsrohr bis in die Aufstecköffnung führbar ist. Das Verlängerungsrohr umschliesst also sowohl Führungsrohr als auch Aufstecköffnung. Dabei können diese dank dem Verlängerungsrohr weiter auseinander gezogen werden als ohne Verlängerungsrohr. Jedoch können Führungsrohr und Aufstecköffnung, auch sie im Verlängerungsrohr eingeführt sind, soweit gegeneinander geschoben werden, dass sie in einander eingreifen. Damit ist ein stufenloses Überbrücken von zunehmenden Abständen zwischen Sockel und Aufsatz möglich.

In einer bevorzugten Ausführungsform der Erfindung weist der Träger mindestes eine bei einem Rohranschluss angeordnete Befestigungsnase auf, zur Fixierung eines eingesetzten Installationsrohres mittels eines um die Befestigungsnase und des Installationsrohres gewickelten Binde-Elementes. Damit kann, zusätzlich zu einer einrastenden Kralle am Sockel respektive am Rohranschluss, eine hoch belastbare Verbindung zwischen einem Installationsrohr und dem Sockel geschaffen werden.

Der Träger für Elektroinstallationen, weist gemäss einem Aspekt der Erfindung einen an einer Wand oder einer Schaltafel befestigbaren Sockel mit mindestens einem Führungsrohr auf, sowie einen Aufsatz, der mittels einer Aufstecköffnung (des Aufsatzes am mindestens einen Führungsrohr durch Bewegung des Aufsatzes in Längsrichtung des Führungsrohres montierbar ist. Dabei weist der Aufsatz ein Anschlagelement auf, welcher mit dem Führungsrohr zusammenwirkend die genannte Bewegung des Aufsatzes beim Montieren des Führungsrohres begrenzt.

Der Träger ist also nicht teleskopierbar, sondern es ist die Position des Aufsatzes bezüglich des Sockels nach dem Ablängen des Führungsrohres klar definiert. Dadurch ist es möglich, ein Führungsrohr (oder serienmässig mehrere Führungsrohre) auf die korrekte Länge abzulängen, und einen (respektive mehrere) Aufsätze ohne weitere Messungen oder Justierungen aufzustecken.

Das Anschlagelement kann an der Innenseite einer Aufstecköffnung, welche über ein Führungsrohr des Trägers gesteckt wird, angeordnet sein, beispielsweise als ein nach innen ragender Vorsprung. Umgekehrt kann aber auch ein Rohrstutzen oder eine Muffe des Aufsatzes in das Führungsrohr steckbar sein, wobei sich das Anschlagelement an der Aussenseite des Rohrstutzens befindet. In diesem Fall kann das Anschlagelement durch eine Rückwand einer Gerätedose gebildet sein, oder durch ein von der Rückwand beabstandetes, nach aussen vorstehendes Element am Rohrstutzen.

Das Anschlagelement verhindert auch, dass das Führungsrohr bis in eine Gerätedose hineinragt, so dass keine Probleme nach dem anschliessenden Isolieren respektive Betonieren entstehen.

Vorzugsweise liegt hinter der Befestigungsplatte ein Distanzierungsbereich einer Muffe zur Befestigung am Führungsrohr vor, mit einer Ausbruchstelle zum Ausbrechen einer Öffnung zur Einführung von Installationsrohren in den Distanzierungsbereich, und verhindert das Anschlagelement eine Bewegung des Führungsrohres vor diese Ausbruchstelle.

Ein Satz von Installationselementen weist Sockel und Aufsätze auf, wobei jeweils ein Aufsatz in Verbindung mit einem Sockel einen Träger gemäss einem der vorangehenden Ansprüche bildet, und wobei die Aufsätze Gerätedosen und Befestigungsplatten umfassen, wobei die Anschlagelemente der Gerätedosen und die Anschlagelemente der Befestigungsplatten an einer derartigen Position angeordnet sind, dass nach Aufstecken eines Aufsatzes auf den Träger sich eine vorderste Montagefläche des Aufsatzes im selben Abstand zum Sockel befindet, ungeachtet dessen, ob der Aufsatz eine Gerätedose oder eine Befestigungsplatte ist.

In einer weiteren bevorzugten Ausführungsform weist der Sockel Kupplungselemente auf, mit welchen er an einen weiteren Sockel gleicher Bauart ankoppelbar ist, wobei im angekoppelten Zustand ein vorgegebener Abstand zwischen den Führungsrohren der beiden Sockel vorliegt. Es sind dadurch also zwei Sockel seitlich aneinander koppelbar, und wird dadurch eine Distanz zwischen den Führungsrohren in seitlicher Richtung definiert, und somit auch die Distanz zwischen den Aufsätzen.

Der Träger kann an einer Wand montiert werden, wobei anschliessend Isolationsmaterial um den Träger angebracht wird, so dass der Aufsatz an der Aussenseite der isolierten Wand liegt. Alternativ kann der Träger auch in eine Wand einbetoniert sein, so dass der Aufsatz an der Aussenseite der Betonwand liegt. Dazu wird der Träger vor dem Betonieren an der Innenseite einer Schaltafel befestigt, wobei der Aufsatz an der gegenüberliegenden Schaltafel anliegt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: eine Explosionszeichnung eines Trägers mit verschiedenen Aufsätzen;
- Figur 2: eine Schnittzeichnung durch einen montierten Träger mit einer Gerätedose als Aufsatz;
- Figur 3: eine Schnittzeichnung durch einen montierten Träger mit einer Befestigungsplatte als Aufsatz;
- Figur 4: einen Sockel mit herausgenommenem Umlenkelement;
- Figur 5: ein Verlängerungsrohr;
- Figur 6: einen Träger mit eingesetzten Verlängerungsrohren;
- Figur 7: eine Befestigung an einer Armierung;
- Figur 8: eine Aufsicht auf einen Sockel; und
- Figur 9: an einer Wand oder einer Schaltafel montierte Träger;
- Figur 10: schematisch die Kombination verschiedener Aufsätze mit einer für beide Aufsätze gültigen Massangabe zur Gesamtlänge; und
- Figur 11: einen Sockel mit Kupplungselementen.

Grundsätzlich sind in den Figuren gleiche Teile mit gleichen Bezugszeichen versehen.

### WEGE ZUR AUSFÜHRUNG DER ERFINDUNG

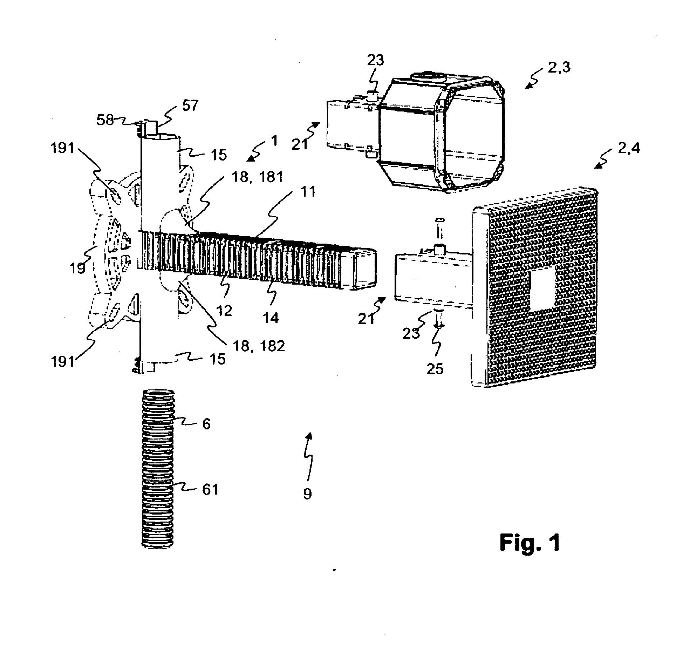

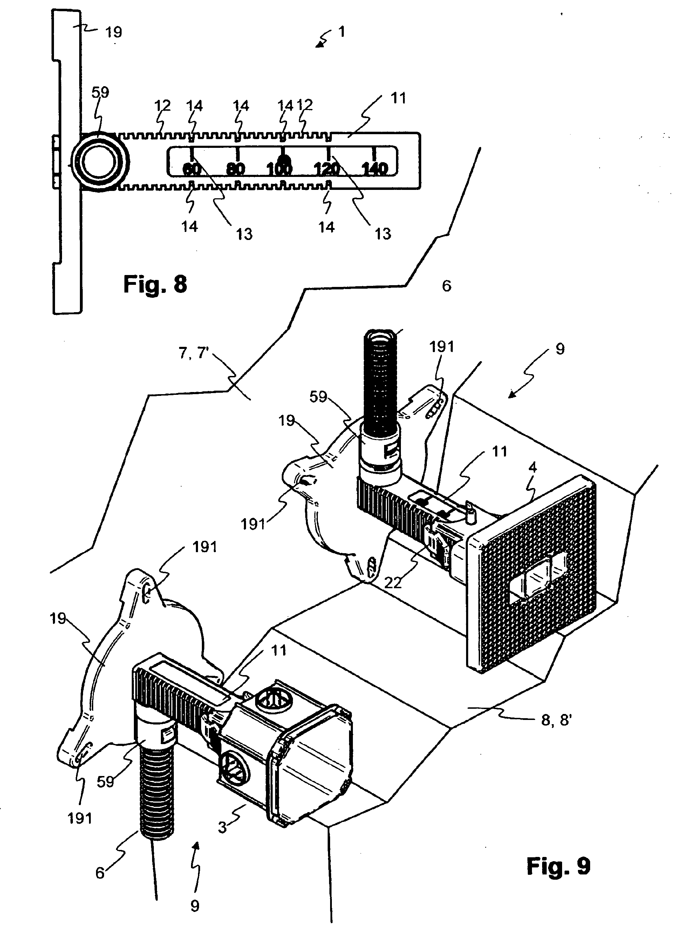

**Figur 1** zeigt eine Explosionszeichnung eines Trägers: Ein Träger 9 weist einen Sockel 1 und einen Aufsatz 2 auf, wobei der Aufsatz 2 beispielsweise eine Gerätedose 3 oder eine Befestigungsplatte 4 ist. Der Sockel 1 weist ein hohles Führungsrohr 11 auf, welches im Wesentlichen senkrecht auf einer Sockelplatte 19 angeordnet ist. Vorzugsweise sind Führungsrohr 11 und Sockelplatte 19 einstückig aus einem industriellen Kunststoff hergestellt, ebenso die verschiedenen Arten von Aufsätzen 2. Das Führungsrohr 11 weist vorzugsweise einen im wesentlichen quadratischen Querschnitt auf, und an mindestens einer, vorzugsweise zwei Seiten eine Rasterung oder Verzahnung 12. An mindestens einer weiteren Seite weist das Führungsrohr 1 eine Längenmarkierung 13 auf (siehe Fig. 8),. An einer oder mehr Kanten des Führungsrohres 11 können in regelmässigen Abständen Führungskerben 14 zum Führen einer Säge zum Ablängen des Führungsrohres 11 angeordnet sein. Beim Übergang zwischen Führungsrohr 11 und Sockelplatte 19 weist das Führungsrohr 11 einen Rohranschluss 15 auf. Der Rohranschluss 15 führt, an die Sockelplatte 19 angrenzend, um einen rechten Winkel in das Führungsrohr 11. Der Rohranschluss 15 ist entweder zur einrastenden Verbindung mit einem Installationsrohr 6 ausgebildet, oder zur Verbindung mit einem Rohrstutzen 59 (siehe Fig. 9), welcher wiederum zur einrastenden Verbindung mit einem Installationsrohr 6 ausgebildet ist. Eine Längsachse des Rohranschlusses 15, des optionalen Rohrstutzens 59 und des Installationsrohres 6 (im Bereich unmittelbar beim Rohranschluss 15) verläuft im wesentlichen senkrecht zur Längsachse des Führungsrohres 11.

Die Sockelplatte 19 weist mindestens drei Führungsbohrungen 191 auf. Diese sind an den Ecken eines Vierecks oder eines vorzugsweise gleichseitigen Dreiecks, dessen Schwerpunkt auf der Achse des Führungsrohres liegt, angeordnet. Die Führungsbohrungen 191 bilden einerseits Löcher zum Befestigen des Sockels 1 und andererseits eine Bohrschablone zum Bohren von Löchern an einer Gebäudewand 7. In einer anderen bevorzugten Ausführungsform der Erfindung liegt jeweils anstelle einer Führungsbohrung 191 eine Führung für ein Befestigungselement wie einen Nagel vor, wobei die Führung aus dem übrigen Sockel 1 heraus reissbar ist. Damit kann der Sockel 1 an einer Schaltafel angenagelt werden, wobei beim Entfernen der Schaltafel nach dem Betonieren der Nagel mit der Führung vom einbetonierten Träger abgerissen werden kann.

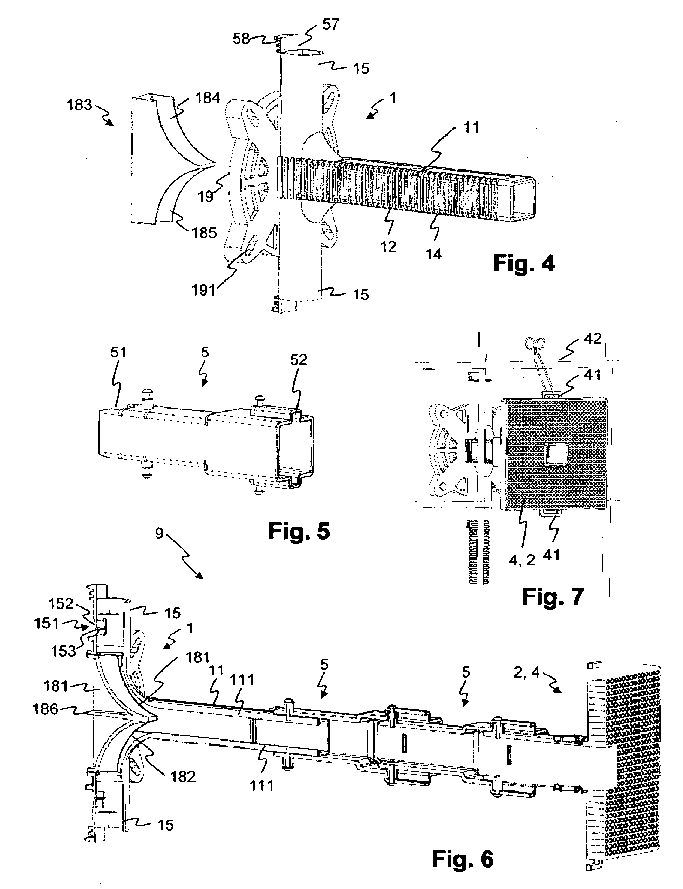

Vorzugsweise weist der Sockel 1 zwei Rohranschlüsse 15 auf, an denen jeweils ein Installationsrohr 6 eingeschoben werden kann. Ein Rohranschluss 15 weist dabei (siehe Fig. 6) in einem ersten Abschnitt eine Kralle 151 auf, welche wiederum aus einer einstückig am Rohranschluss 15 angeformten Lasche 152 und einem gegen die Rohrinnenseite weisenden Widerhaken 153 besteht. Beim Einschieben eines gerillten Installationsrohres 6 in diesen ersten Abschnitt rastet die Kralle 151 an den Rillen des Installationsrohres 6 ein. Weitere Details dieser Verbindung sind in der EP 1 719 942 B1 beschrieben. Alternativ kann die Kralle 151 an einem Rohrstutzen 59 angeformt sein, welcher einrastend in den Rohranschluss 15 steckbar ist (siehe Fig. 9).

Gemäss einer ähnlichen Ausführungsform der Erfindung (nicht dargestellt) weist der Rohranschluss, in axialer Richtung und von aussen her gesehen, zunächst einen ersten Abschnitt mit einem grösseren Durchmesser und dann einen zweiten Abschnitt mit einem kleineren Durchmesser auf. Jeder der beiden Abschnitte kann eine oder mehr Krallen zum Halten eines eingeschobenen Installationsrohres aufweisen. Damit können Installationsrohre unterschiedlicher Durchmesser angeschlossen werden; die Rohre grösseren Durchmessers rasten im ersten Abschnitt ein, jene kleineren Durchmessers im zweiten Abschnitt. Natürlich können auch mehr als zwei solcher Abschnitte unterschiedlichen Durchmessers vorliegen. Auch kann der bereits erwähnte separate Rohrstutzen 59 solche Abschnitte aufweisen.

Jeder der Rohranschlüsse 15 führt über einen Rohrbogen 18 in das Führungsrohr 11. Ein Rohrbogen 18 weist an der Aussenseite des Bogens einen Radius von mindestens drei oder mindestens vier Zentimetern auf. So werden Elektrokabel beim Einschieben sicher um den Bogen geführt. Vorzugsweise liegt ein Umlenkelement 183 vor, welches lösbar im Sockel 1 eingesteckt ist und mindestens eine Bogenwand 184, 185 an der Aussenseite der Innenwand jeweils eines Rohrbogens 18 bildet (siehe Fig. 4). Dieses erlaubt, den Rest des Sockels 1 hinterschnittfrei aus einem Stück zu giessen, indem der zum Umlenkelement 183 und zu den Rohrbögen 181, 182 komplementäre Raum im Sockel 1 beim Giessen einen Schieber der (Spritz)Gussform aufnimmt, der die Innenseite der Rohrbogen 18 definiert.

Ein Aufsatz 2 weist ferner jeweils eine Kupplung zum Führungsrohr 11 auf. Diese Kupplung wird durch eine Aufstecköffnung 21 eines Rohrstutzens oder einer Muffe an einer Rückseite des jeweiligen Aufsatzes 2 und eine Führung, deren Form mit dem Aussenquerschnitt des Führungsrohres 11 korrespondiert, gebildet. Die Aufsätze 2 weisen ferner eine Schraubenführung 23 für eine optionale Sicherungsschraube 25, welche dadurch im Aufsatz 2 gehalten ist und gegen oder in das Material des Führungsrohrs 11 gedreht werden kann. Optionale Rastelemente an der Innenseite der Aufstecköffnung 21 können dabei in die Verzahnungen 12 des Führungsrohres 11 einrasten.

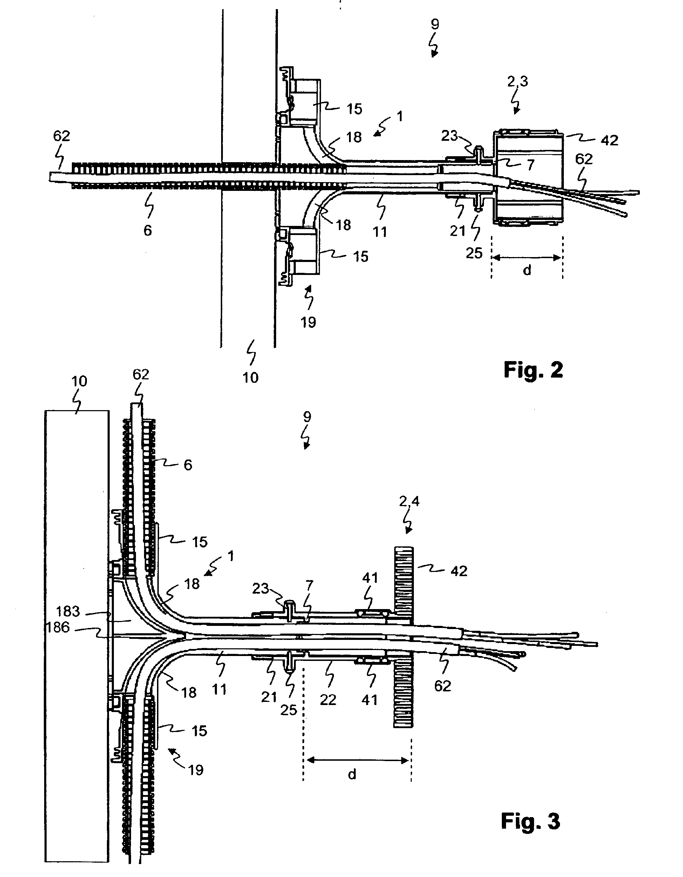

**Figur 2** zeigt einen Schnitt durch eine mögliche Konfiguration eines Trägers 9. Hier ist das Umlenkelement 183 nicht eingesetzt. Als Aufsatz 2 ist beispielhaft eine Gerätedose 3 gezeigt. Mit dem Bezugszeichen 10 ist eine zu isolierende Wand oder eine Schaltafel vor dem Betonieren bezeichnet, auf welcher der Sockel 1 des Trägers 9 montiert ist. Ein Installationsrohr 6 mit Kabeln ist 62 in der Verlängerung des Führungsrohres 11 durch die Wand 10 in das Führungsrohr 11 hinein geführt. Auf das Führungsrohr 11 aufgesteckt ist eine Gerätedose 3, wobei ein Anschlagelement 7 die Bewegung des Führungsrohres 11 in die Aufstecköffnung 21 der Gerätedose 3 begrenzt. Das Anschlagelement 7 ist hier bündig mit einer Hinterseite der Gerätedose 3 gezeichnet, es kann aber auch weiter hinten in der Aufstecköffnung 21 angeordnet sein (in der Figur: weiter links).

**Figur 3** zeigt einen Schnitt durch eine weitere mögliche Konfiguration eines Trägers 9, mit eingesetztem Umlenkelement 183. Sowohl bei einem oberen wie auch einem unteren Rohranschluss 15 ist jeweils ein Installationsrohr 6 mit darin (später) verlegten Elektrokabeln 62 eingeschoben. Ein erster Bogen 181 und ein zweiter Bogen 182 führen aus entgegen gesetzten Richtungen von den Rohranschlüssen 15 in das Führungsrohr 11. Beispielhaft ist eine Befestigungsplatte 4 als Aufsatz 2 eingezeichnet. Es kann aber genauso gut eine Gerätedose 3 als Aufsatz 2 eingesetzt werden, wie auch in der Konfiguration der Figur 2 eine Befestigungsplatte 4. Das Anschlagelement 7 ist auch hier an der Innenseite der Aufstecköffnung 21 angeordnet.

**Figur 4** zeigt einen Sockel mit herausgenommenem Umlenkelement 183. Das Umlenkelement 183 weist ein Halteelement, beispielsweise eine Grifflasche 186 (siehe Fig. 6) oder Öffnungen, an welchen das Umlenkelement 183 von Hand oder mit einem Werkzeug gegriffen werden kann, und mittels welchem es von Hand aus dem Sockel 1 herausziehbar ist. Damit kann das Umlenkelement 183 einfach entfernt werden, wenn ein Zugriff auf verlegte Kabel erforderlich ist, oder wenn Kabel in Richtung der Verlängerung des Führungsrohres 11 durchgeführt werden sollen.

Im Bereich jeweils eines Rohranschlusses 15 weist der Sockel 1 eine Befestigungsnase 57 auf, an welcher ein Installationsrohr 6, welches in den Rohranschluss 15 gesteckt ist, mit weiteren Befestigungsmitteln oder Binde-Elementen manuell befestigbar ist. Als Binde-Elemente sind auf einer Baustelle ohnehin vorhandene Bindedrähte für Armierungseisen, oder Kunststoff-Kabelbinder verwendbar. Die Befestigungsnase 57 weist an einer von einem eingesetzten Installationsrohr 6 abgewandten Seite eine oder mehrere Kerben 58 auf, welche in eine Richtung senkrecht zu jener des eingesetzten Installationsrohres 6 verlaufen. Das Binde-Element liegt somit beim Binden in einer oder mehren Kerben 58 und, bei einem gerippten Installationsrohr 6, auch in Rillen 61 desselben. Damit ist diese Verbindung auf Zug in Richtung des Installationsrohres 6 belastbar.

**Figur 5** zeigt ein Verlängerungsrohr 5 und **Figur 6** einen Träger 9 mit eingesetzten Verlängerungsrohren 5. Das Verlängerungsrohr 5 umfängt an einem inneren Ende 51 das Führungsrohr 11 und an einem äusseren Ende 52 die Aufstecköffnung 21 eines Aufsatzes 2. Das Verlängerungsrohr 5 liegt also an beiden Enden ausserhalb eines jeweils eingesteckten Elements (Führungsrohr 11 und Aufsteckteil des Aufsatzes 2). Dadurch kann das Führungsrohr 11 auch soweit in das Verlängerungsrohr 5 hinein geschoben werden, bis es in die Aufstecköffnung 21 einfährt. Analog zum Aufsatz 2 weist auch ein Verlängerungsrohr 5 Führungen für Sicherungsschrauben auf.

Das Führungsrohr 11 weist, wie in **Fig. 6** zu sehen, eine Verstärkung 111 entlang eines Bereiches auf, in welchem die Sicherungsschraube 25 eines Aufsatzes 2 gegen das Führungsrohr 11 drückt. Die Verstärkung schützt eingelegte Elektrokabel vor Verletzung mit der Spitze der Sicherungsschraube 25. Hier ist die Verstärkung beispielhaft durch eine in die lichte Weite des Führungsrohres 11 hineinragende Längsrippe 111 gebildet. Alternativ kann die Verstärkung auch durch eine Verdickung einer gesamten Wand des Führungsrohres 11 gebildet sein.

Der Aufsatz 2 weist mindestens ein Befestigungsmittel 41, insbesondere eine Öse 41 oder einen Haken zur hängenden Fixierung des Trägers 9 auf. Beispielsweise lässt sich der Aufsatz 2 mit einem Bindedraht an einem Armierungseisen befestigen, respektive aufhängen, und ist dadurch gegen Verschieben beim Einfüllen des Betons in die Schalung geschützt. Analoge Befestigungsmittel können an einer Gerätedose 3 oder einer Befestigungsplatte 4 vorliegen, oder im Bereich der Aufstecköffnung 21 des Aufsatzes 2. **Figur 7** zeigt eine dementsprechende hängende Befestigung eines Aufsatzes 2 an einem Armierungseisen 42, bevor eine Schaltafel gegen den Aufsatz 2 platziert wird und Beton eingebracht wird.

**Figur 8** zeigt eine Aufsicht auf einen Sockel 2, mit insbesondere der bereits genannten Verzahnung 12, der Längenmarkierung 13 und den Führungskerben 14. Es wird sichtbar, dass die Führungskerben 14 auch Kerben der Verzahnung 12 formen, jedoch breiter und tiefer als diese ausgebildet sein können. Typische Masse für einen Sockel 2 sind beispielsweise: Abstand der Führungsbohrungen 10 bis 20 cm; Länge des Führungsrohres 10 bis 20 cm; Breite und Höhe des Führungsrohres 2 bis 4 cm; Anschluss für Installatationsrohre mit einem Durchmesser von 2 oder mehr cm.

**Figur 9** zeigt an einer Wand 7 montierte Träger 9, welche nicht der Erfindung entsprechen, jedoch zum besseren Verständnis der Erfindung die Verwendung von Trägem illustrieren. Die Träger 9 sind in verschiedenen Stellungen gezeigt, sowie eine weggeschnittene Schicht von Isolationsmaterial respektive Dämmmaterial 8, innerhalb welcher die Träger 9 angeordnet sind. Alternativ kann ein Träger 9 auch in einer Betonwand einbetoniert werden, dann entspricht die Wand in der Figur einer Schaltafel 7', und das Material, das die Träger 9 umfängt, ist Beton 8'.

Ungeachtet dessen, ob nun eine Gerätedose 3 oder eine Befestigungsplatte 4 im Einsatz ist, gilt vorzugsweise folgendes (siehe **Fig. 2** und **3**): Das Führungsrohr 11 ist nur bis zum Anschlagelement 7 in die Aufstecköffnung 21 einschiebbar. Zwischen dem Ende des Führungsrohres 11, respektive der wirksamen Fläche des Anschlagelements 7, und einer Frontfläche oder Montagefläche 42 des Aufsatzes 2 entsteht dadurch ein Abstand d. Bei einer Gerätedose 3 wird dieser Abstand vorwiegend durch die Tiefe der Gerätedose 3 aufgenommen. Bei einer Befestigungsplatte 4 wird dieser Abstand durch einen Distanzierungsbereich 22 im Rohrstutzen respektive der Muffe in der Verlängerung der Aufstecköffnung 21 aufgenommen. Der Distanzierungsbereich 22 beabstandet also das Anschlagelement 7 von der Montagefläche 42.

Werden Gerätedosen 3 und Befestigungsplatten 4 an derselben Wand eingesetzt, so steht vorzugsweise ein Satz von Gerätedosen 3 und Befestigungsplatten 4 zur Verfügung, bei denen der Abstand d derselbe ist. Dann ist es möglich, alle Sockel 1 auf dieselbe Länge abzulängen, wonach nach dem Aufstecken alle Gerätedosen 3 und Befestigungsplatten 4 ihre Frontflächen oder Montageflächen 42 im selben Abstand zur Wand 10 haben, also im wesentlichen bündig zur zukünftigen Wandaussenfläche nach dem Betonieren oder Isolieren. Es muss also nur einmal die erforderliche Länge der Führungsrohre 11 bestimmt werden, was die Arbeit vereinfacht.

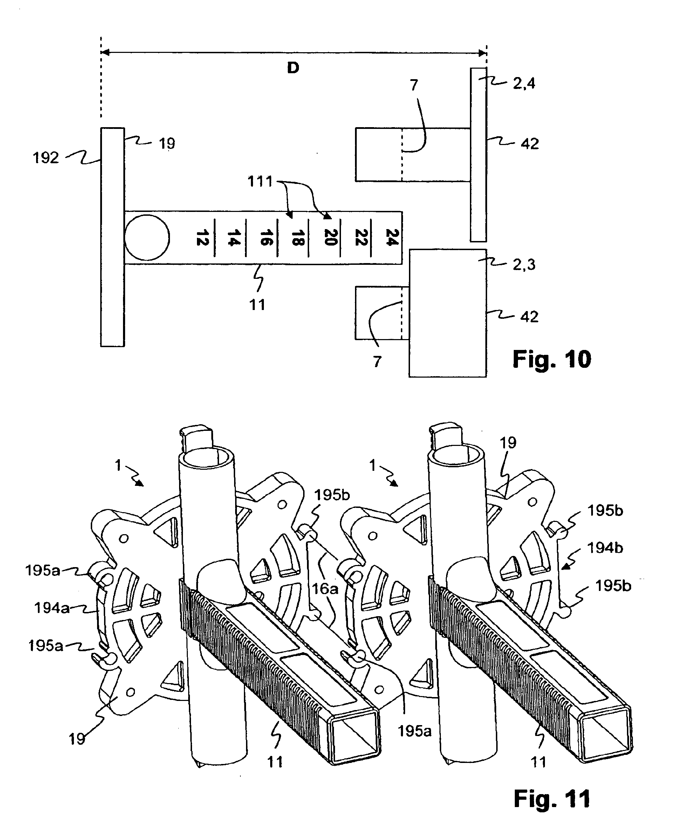

In einer bevorzugten Ausführungsform der Erfindung, in der **Figur 10** schematisch dargestellt, weist der Träger 9 einen am Führungsrohr angeordneten und in Längsrichtung des Führungsrohres 11 verlaufenden Massstab mit Längenmarkierungen 111 auf, wobei eine Längenmarkierung 111 jeweils den in Längsrichtung des Führungsrohres gemessenen Abstand zwischen den äusseren Begrenzungsflächen 142, 192 von Sockel 1 und Aufsatz 2 anzeigt, falls das Führungsrohr 11 bei der Längenmarkierung 111 abgelängt (d.h. abgesägt oder abgeschnitten) ist und der Aufsatz 2 bis zum Anschlag 7 auf das Führungsrohr 11 gesteckt ist (In der **Figur 10** ist der Anschlag 7, oder genauer, die Linie, an welcher das Führungsrohr 11 gegen den Anschlag 7 stösst, in schematischer Weise strichliert dargestellt). Mit anderen Worten: eine Längenmarkierung 111 zeigt jeweils die Summe der Distanz zwischen einer Fussfläche 192 des Sockels 1 (welche nach Montage an der Wand oder Schaltafel 10 anliegt) und der Längenmarkierung 111 plus der Distanz zwischen dem Anschlag 7 und der Montagefläche 42 eines Aufsatzes 2. Damit ist es möglich, ohne Verwendung eines weiteren Massstabes einen Träger 9 für einen gewünschten Abstand entsprechend der Wanddicke oder Isolationsdicke einzurichten, indem einfach das Führungsrohr 11 an der Stelle abgelängt wird, an welcher die Längenmarkierung diesen Abstand anzeigt. Im in **Figur 4** gezeigten Zustand beträgt der Abstand D beispielhaft 24 cm. Wird das Führungsrohr an der Markierung "18" gekürzt, so beträgt bei aufgesteckter Gerätedose 3 oder Befestigungsplatte 4 der Abstand 18 cm.

**Figur 11** zeigt zwei Sockel 1 von Teleskop-Haltern 9, an denen Kupplungselemente 195 vorliegen. In dieser bevorzugten Ausführungsform der Erfindung sind die Kupplungselemente 195 einerseits Einbuchtungen 195a und andererseits vorstehende Elemente 195b. Die Form der vorstehenden Elemente 195b korrespondiert mit der Form der Einbuchtungen 195a, so dass die vorstehenden Elemente 195b durch eine Bewegung in eine erste Montagerichtung 16a senkrecht zur Montageebene in die Einbuchtungen 195a geführt werden können und dadurch eine formschlüssige Verbindung der beiden Sockel 1 bilden. Zwischen den Kupplungselementen 195a, b sind ebenfalls zueinander komplementäre Kontaktflächen 194a, b ausgebildet, welche die gegenseitige Lage der Sockel 1 respektive der Sockelplatten 19 innerhalb der Montageebene definieren. Beispielhaft sind die Kupplungselemente 195a, b rund respektive zylindrisch, sie können aber auch eine andere Geometrie aufweisen, z.B. entsprechend einer Schwalbenschwanzverbindung. Ferner können die Kupplungselemente 195a, b wie gezeichnet eine rein prismatische Verbindung definieren, oder aber auch eine Schnappverbindung oder eine einrastende Verbindung.

## Patentansprüche

1. Träger (9) für Elektroinstallationen, aufweisend einen an einer Wand (10) oder einer Schaltafel (10) befestigbaren Sockel (1) mit einem Führungsrohr (11), sowie einen Aufsatz (2), der mittels einer Aufstecköffnung (21) des Aufsatzes (2) am Führungsrohr (11) montierbar ist, wobei der Sockel (1) einen Rohranschluss (15) zum seitlichen Einführen von Elektrokabeln in das Führungsrohr (11) aufweist, **dadurch gekennzeichnet, dass** ein Übergang zwischen dem Rohranschluss (15) und dem Führungsrohr (11) durch einen Rohrbogen (18) gebildet ist, wobei der Rohrbogen (18) an der Aussenseite seiner Innenwand einen mittleren Krümmungsradius von mindestens drei oder vorzugsweise mindestens vier Zentimetern aufweist.

2. Träger (9) gemäss Anspruch 1, welcher zwei Rohranschlüsse (15) aufweist, welche aus verschiedenen Richtungen, jeweils über einen eigenen Rohrbogen (181, 182), in das Führungsrohr (11) führen.

3. Träger (9) gemäss einem der bisherigen Ansprüche, aufweisend ein Umlenkelement (183), welches lösbar in den Sockel (1) eingesetzt ist und eine äussere Bogenwand mindestens eines Rohrbogens (18) bildet.

4. Träger (9) gemäss Anspruch 3, aufweisend zwei Rohranschlüsse (15), welche aus entgegen gesetzten Richtungen durch einen ersten Bogen (181) respektive einen zweiten Bogen (182) in das Führungsrohr (11) führen, und wobei das Umlenkelement (183), wenn es im Sockel (1) eingesetzt ist, eine äussere Bogenwand des ersten Bogens (181) wie auch des zweiten Bogens (182) bildet.

5. Träger (9) gemäss einem der Ansprüche 3 bis 4, wobei das Umlenkelement (183) ein Halteelement aufweist, an welchem es von Hand aus dem Sockel (1) herausziehbar ist.

6. Träger (9) gemäss einem der Ansprüche 3 bis 5, wobei bei nicht eingesetztem Umlenkelement (183) Elektrokabel in einer geradlinigen Verlängerung des Führungsrohres (11) durch den Sockel (1) hindurch führbar sind.

7. Träger (9) gemäss einem der bisherigen Ansprüche, aufweisend ein Verlängerungsrohr (5), welches mit einem inneren Ende (51) auf das Führungsrohr (11) des Sockels (1) und mit einem äusseren Ende (52) auf die Aufstecköffnung (21) des Aufsatzes (2) aufsteckbar ist, wobei auch dann noch das Führungsrohr (11) bis in die Aufstecköffnung (21) führbar ist.

8. Träger (9) gemäss einem der bisherigen Ansprüche, aufweisend mindestens eine bei einem Rohranschluss (15) angeordnete Befestigungsnase (57) zur Fixierung eines eingesetzten Installationsrohres (6) mittels eines um die Befestigungsnase (57) und des Installationsrohres (6) gewickelten Binde-Elementes.

9. Träger (9) gemäss Anspruch 8, wobei die Befestigungsnase (57) an einer von einem eingesetzten Installationsrohr (6) abgewandten Seite eine oder mehrere Kerben (58) aufweist, welche in eine Richtung senkrecht zu jener des eingesetzten Installationsrohres (6) verlaufen.

10. Träger (9) gemäss einem der bisherigen Ansprüche, aufweisend eine Verstärkung des Führungsrohres (11) entlang eines Bereiches, in welchem eine Sicherungsschraube (25) eines Aufsatzes (2) gegen das Führungsrohr (11) drückt.

11. Träger (9) gemäss Anspruch 10, in welchem die Verstärkung durch eine in die lichte Weite des Führungsrohres (11) hineinragende Längsrippe gebildet ist.

12. Träger (9) gemäss einem der bisherigen Ansprüche, wobei der Aufsatz (2) mindestens ein Befestigungsmittel (41), insbesondere eine Öse (41) oder einen Haken zur hängenden Fixierung des Trägers (9) aufweist.

13. Träger (9) gemäss einem der bisherigen Ansprüche, wobei die Aufstecköffnung (21) und das mindestens eine Führungsrohr (11) eine durchgängige Rohrverbindung zwischen Sockel (1) und Aufsatz (2) zur Durchführung von Kabeln (62) bilden und wobei der Aufsatz (2) durch Bewegung des Aufsatzes in Längsrichtung des Führungsrohres (11) montierbar ist und ein Anschlagelement (7) aufweist, welches mit dem Führungsrohr (11) zusammenwirkend die genannte Bewegung des Aufsatzes (2) beim Montieren des Führungsrohres (11) begrenzt.

14. Träger (9) gemäss Anspruch 13, aufweisend einen am Führungsrohr angeordneten und in Längsrichtung des Führungsrohres (11) verlaufenden Massstab mit Längenmarkierungen (111), wobei eine Längenmarkierung (111) jeweils den in Längsrichtung des Führungsrohres gemessenen Abstand zwischen den äusseren Begrenzungsflächen von Sockel (1) und Aufsatz (2) anzeigt, falls das Führungsrohr (11) bei der Längenmarkierung (111) abgelängt ist und der Aufsatz (2) bis zum Anschlag (7) auf das Führungsrohr (11) gesteckt ist.

15. **Satz von Installationselementen**, aufweisend Sockel (1) und Aufsätze (2), wobei jeweils ein Aufsatz (2) in Verbindung mit einem Sockel (1) einen Träger (9) gemäss einem der Ansprüche 13 oder 14 bildet, und wobei die Aufsätze (2) Gerätedosen (3) und Befestigungsplatten (4) umfassen, wobei die Anschlagelemente (7) der Gerätedosen (3) und die Anschlagelemente (7) der Befestigungsplatten (4) an einer derartigen Position angeordnet sind, dass nach Aufstecken eines Aufsatzes (2) auf den Träger (9) sich eine vorderste Montagefläche (42) des Aufsatzes (2) im selben Abstand zum Sockel (1) befindet, ungeachtet dessen, ob der Aufsatz (2) eine Gerätedose (3) oder eine Befestigungsplatte (4) ist.

## Claims

1. Carrier (9) for electrical installations, comprising a base (1) capable of being attached to a wall (10) or to a formwork panel (10) with a guide tube (11), as well as an attachment (2), which by means of a plug-on opening (21) of the attachment (2) is able to be mounted on the guide tube (11), wherein the base (1) comprises a tube connection (15) for the lateral introduction of electric cables into the guide tube (11), **characterised in that** a transition between the tube connection (15) and the guide tube (11) is formed by a tube bend (18), wherein the tube bend (18) on the outside of its inner wall comprises an average bend radius of at least three or in preference at least four centimetres.

2. Carrier (9) in accordance with claim 1, which comprises two tube connections (15), which from different directions, respectively through an own pipe bend (181, 182) lead into the guide tube (11).

3. Carrier (9) in accordance with one of the preceding claims, comprising a deflection element (183), which is inserted into the base (1) capable of being released and which forms an outside bend wall of at least one tube bend (18).

4. Carrier (9) in accordance with claim 3, comprising two tube connections (15), which from opposite directions lead through a first bend (181), respectively through a second bend (182 lead into the guide tube (11), and wherein the deflection element (183), when it is inserted into the base, forms an outside bend wall of the first bend (181) as well as of the second bend (182).

5. Carrier (9) in accordance with one of the claims 3 to 4, wherein the deflection element (183) comprises a holding element, by which it is capable of being pulled out of the base (1) by hand.

6. Carrier (9) in accordance with one of the claims 3 to 5, wherein in case of a not inserted deflection element (183) electric cables are capable of being guided through the base (1) in a straight-line extension of the guide tube (11).

7. Carrier (9) in accordance with one of the preceding claims, comprising an extension tube (5), which with an inside end (51) is capable of being plugged onto the guide tube (11) of the base (1) and with an outside end (52) onto the plug-on opening (21) of the attachment (2), wherein also then still the guide tube (11) is able to be guided right into the plug-on opening (21).

8. Carrier (9) in accordance with one of the preceding claims, comprising at least one fixing nose (57) attached next to a tube connection (15) for fixing an inserted installation tube (6) by means of a linking element wound around the fixing nose (57) and the installation tube (6).

9. Carrier (9) in accordance with claim 8, wherein the fixing nose (57) on a side facing away from an inserted installation tube (6) comprises one or several grooves (58), which extend in a direction vertical to that of the inserted installation tube (6).

10. Carrier (9) in accordance with one of the preceding claims, comprising a reinforcement of the guide tube (11) along an area in which a locking screw (25) of an attachment (2) presses against the guide tube (11).

11. Carrier (9) in accordance with claim 10, in which the reinforcement is formed by a longitudinal rib protruding into the clear expanse of the guide tube.

12. Carrier (9) in accordance with one of the preceding claims, wherein the attachment (2) comprises at least one fixing means (41), in particular a lug (41) or a hook for fixing the carrier (9) in a suspended manner.

13. Carrier (9) in accordance with one of the preceding claims, wherein the plug-on opening (21) and the at least one guide tube (11) form a continuous tube connection between the base (1) and the attachment (2) for conducting cables (62) through and wherein the attachment (2) is capable of being mounted by moving the attachment in longitudinal direction of the guide tube and comprises a stopping element (7), which acting together with the guide tube (11) limits the mentioned movement of the attachment (2) in cooperation with the guide tube (11).

14. Carrier (9) in accordance with claim 13, comprising a scale with longitudinal markings (111) arranged on the guide tube (11), wherein a longitudinal marking (111) respectively indicates the distance between the outside limiting surfaces of base (1) and attachment (2) measured in longitudinal direction of the guide tube, in case the guide tube (11) cut to length at the longitudinal marking (111) and the attachment (2) is plugged onto the guide tube (11) right up to the stop (7).

15. **A set of installation elements,** comprising a base (1) and caps (2), wherein respectively an attachment (2) in conjunction with a base (1) forms a carrier (9) in accordance with one of the claims 13 or 14, and wherein the caps (2) comprise socket boxes (3) and fixing plates (4), wherein the stopping elements (7) of the device cases (3) are arranged in such a position, that after plugging on a attachment (2)onto the carrier (9) there is a front installation surface (42) of the attachment (2) at the same distance to the base (1), independent of whether the attachment (2) is a socket box (3) or a fixing plate (4).

## Revendications

1. Support (9) pour installations électriques, présentant
un socle (1) doté d'un tube de guidage (11) et apte à être fixé sur une paroi (10) ou sur un panneau de coffrage (10),
ainsi qu'un appendice (2) qui peut être monté sur le tube de guidage (11) au moyen d'une ouverture d'enfichage (21) de l'appendice (2),
le socle (1) présentant un raccordement tubulaire (15) permettant d'insérer latéralement les câbles électriques dans le tube de guidage (11),
**caractérisé en ce que**
la transition entre le raccordement tabulaire (15) et le tube de guidage (11) est formée par une courbe tubulaire (18),
**en ce que** la courbe tubulaire (18) présente sur le côté extérieur de sa paroi intérieure un rayon de courbure moyen qui représente au moins trois ou de préférence au moins quatre centimètres.

2. Support (9) selon la revendication 1, présentant deux raccords tubulaires (15) qui conduisent dans le tube de guidage (11) dans deux directions différentes, chacun par une courbe tubulaire propre respective (181, 182).

3. Support (9) selon l'une des revendications précédentes, présentant un élément de renvoi (183) inséré de manière libérable dans le socle (1) et formant la paroi extérieure d'au moins une courbe tubulaire (18).

4. Support (9) selon la revendication 3, présentant deux raccords tubulaires (15) qui conduisent dans le tube de guidage (11) dans des directions mutuellement opposées par l'intermédiaire d'une première courbe (181) ou d'une deuxième courbe (182) respectives, l'élément de renvoi (183) formant la paroi extérieure de la première courbe (181) ainsi que celle de la deuxième courbe (182) lorsqu'il a été inséré dans le socle (1).

5. Support (9) selon l'une des revendications 3 à 4, dans lequel l'élément de renvoi (183) présente un élément de maintien par lequel il peut être extrait à la main hors du socle (1).

6. Support (9) selon l'une des revendications 3 à 5, dans lequel lorsque l'élément de renvoi (183) n'a pas été inséré, des câbles électriques peuvent être guidés à travers le socle (1) dans un prolongement rectiligne du tube de guidage (11).

7. Support (9) selon l'une des revendications précédentes, présentant un tube de prolongement (5) qui peut être enfiché par une extrémité intérieure (51) sur le tube de guidage (11) du socle (1) et par une extrémité extérieure (52) sur l'ouverture d'enfichage (21) de l'appendice (2), le tube de guidage (11) pouvant même alors être guidé jusque dans l'ouverture d'enfichage (21).

8. Support (9) selon l'une des revendications précédentes, présentant au moins un bec de fixation (57) disposé sur le raccord tubulaire (15) pour fixer au moyen d'un élément de liaison enroulé autour du bec de fixation (57) et du tube d'installation (6) un tube d'installation (6) qui a été inséré.

9. Support (9) selon la revendication 8, dans lequel le bec de fixation (57) présente sur un côté non tourné vers le tube d'installation (6) qui a été inséré une ou plusieurs entailles (58) qui s'étendent dans une direction perpendiculaire à celle du tube d'installation (6) qui a été inséré.

10. Support (9) selon l'une des revendications précédentes, présentant un épaississement du tube de guidage (11) dans une partie dans laquelle une vis de fixation (25) d'un appendice (2) repousse le tube de guidage (11).

11. Support (9) selon la revendication 10, dans lequel l'épaississement est formé par une nervure longitudinale qui pénètre dans la largeur intérieure du tube de guidage (11).

12. Support (9) selon l'une des revendications précédentes, dans lequel l'appendice (2) présente au moins un moyen de fixation (41), de préférence un oeillet (41) ou un crochet qui permet de fixer le support (9) en le suspendant.

13. Support (9) selon l'une des revendications précédentes, dans lequel l'ouverture d'enfichage (21) et le ou les tubes de guidage (11) forment une liaison tubulaire continue entre le socle (1) et l'appendice (2) permettant la traversée de câbles (62), l'appendice (2) pouvant être monté en délaçant l'appendice dans le sens de la longueur du tube de guidage (11) et présentant un élément de butée (7) qui en coopérant avec le tube de guidage (11) limite ledit déplacement de l'appendice (2) lors du montage du tube de guidage (11).

14. Support (9) selon la revendication 13, présentant une échelle de mesure qui est disposée sur le tube de guidage et qui s'étend dans le sens de la longueur du tube de guidage (11), qui présente des repères de longueur (11), un repère de longueur (111) indiquant chaque fois la distance, mesurée dans le sens de la longueur du tube de guidage, qui s'étend entre la surface extérieure délimitant le socle (1) et l'appendice (2) au cas où le tube de guidage (11) a été découpé à longueur au niveau du repère de longueur (11) et que l'appendice (2) a été enfiché sur le tube de guidage (11) jusqu'à la butée (7).

15. Jeu d'éléments d'installation présentant des socles (1) et des appendices (2), un appendice (2) formant avec un socle (1) un support (9) selon l'une des revendications 13 ou 14, les appendices (2) comportant des boîtiers (3) pour appareil et des plaques de fixation (4), les éléments de butée (7) des boîtiers (3) pour appareil et les éléments de butée (7) des plaques de fixation (4) étant disposés en position telle qu'après l'enfichage d'un appendice (2) sur le support (9), une surface avant (42) de montage avant de l'appendice (2) est située à la même distance du socle (1) que l'appendice (2) soit un boîtier (3) pour appareil ou une plaque de fixation (4).
